# EUROPEAN PATENT SPECIFICATION

(11) **EP 3 772 273 B1**
(45) Date of publication and mention of the grant of the patent: **03.12.2025**
(21) Application number: 19189965.7
(22) Date of filing: 05.08.2019
(51) Int. Cl.: A01K 5/02

(54) **POWERED FEED VEHICLE**
ANGETRIEBENES FÜTTERUNGSFAHRZEUG
VÉHICULE D'ALIMENTATION ÉLECTRIQUE

(43) Date of publication of application: 10.02.2021
(73) Proprietor: Hedensted Gruppen A/S, 8722 Hedensted (DK)
(72) Inventor: Christiansen, Kim, 5464 Brenderup (DK); Madsen, Jens Jørgen, 5220 Odense SØ (DK)
(74) Representative: COPA Copenhagen Patents

(56) References cited:
- DE-U1- 8 704 136
- DK-B1- 176 402
- DK-B1- 177 560
- DK-B1- 177 727

## Description

### Field of the invention

The present invention relates to a powered feed vehicle for delivering feed portions to fur animal cages, especially mink cages, especially to a wire mesh top wall thereof, said feed vehicle having a longitudinal axis, a front, a back, a first lateral side and a second lateral side and comprising
- a frame supported by wheels and carrying a feed container with an inner space for storing feed, especially pasty feed,
- a feed-delivering device comprising a tubing and a feed-delivering mouthpiece,
- a pump mechanism configured to pump feed from the feed container into and through the tubing of the feed-delivering device to the feed-delivering mouthpiece of the feed-delivering device and out through a feed outlet opening of the mouthpiece, said feed outlet opening having a central axis and being defined by an annular edge,
- a cutting device comprising at least one cutting member arranged to be moved transversely in front of the outlet opening for severing a feed string emerging from the outlet opening, and
- a control device for controlling the operation of the cutting device,
wherein the cutting device comprises a first and a second cutting member.

### Background of the invention

Powered feed vehicles are known both as manned and unmanned vehicles, see e.g. EP 3 036 991 A1, DK 176 402 B1 and WO 2008/101500 A1. Additionally, feed vehicles with a feed-delivering device or feed arm having a mouthpiece with a cutting device having a cutting member configured for being moved across the outlet opening of the mouthpiece from one side to the opposite side of the opening for severing a string of feed are known from e.g. DK 177 727 B1, DK 177 560 B1 and DK 176 402 B1.

### Summary of the Invention

The object of the present invention is to provide a feed vehicle allowing for discharging a precise and predetermined amount of feed precisely on a predetermined point of the top wall of cages.

The feed vehicle according to the invention is characterized in that the cutting device comprises:
- a first and a second cutting member each having a leading edge and being arranged to move towards each other from respective first positions outside the outlet opening as seen in the direction of the central axis of the outlet opening of the mouthpiece to a cutting position in which the leading edges of the cutting members meet within and together have swept the entire outlet opening as seen in the direction of the central axis of the outlet opening of the mouthpiece and severed a feed string emerging from the outlet opening.

When a string of feed is cut, the leading edges of the cutting members are moved towards each other and meet within the outlet opening as seen in the direction of the central line of the outlet opening. The string emerging from the outlet opening is thereby subjected to a cutting force from the leading edge of each of the cutting members. The mentioned cutting forces from the cutting members moved towards each other will substantially outbalance each other so that the feed string is substantially not subjected to any resulting lateral force when being cut. As a result, the feed string can be delivered more precisely to the top wall of a cage that is the case when delivering a cutting a feed string by a cutting member being moved across the outlet opening of a mouth piece.

The pump mechanism can comprise a pump or pump means, preferably a displacement pump, such as e.g. a gear pump, a diaphragm pump, a mono pump or a screw pump.

According to an embodiment, the leading edges of the cutting members meet at a central line or band across the outlet opening and preferably at an essentially vertical central line located in an essentially vertical plane through the central axis of the outlet opening of the mouthpiece.

According to an embodiment, the leading edges of the cutting members are linear.

The leading edges of the cutting member can also have another shape than linear, such as a curved shape.

According to a further embodiment, the cutting members are configured and dimensioned to cover the entire outlet opening as seen in the direction of the longitudinal axis of the mouthpiece in the cutting position. Thereby, the cutting members become? combined cutting and closing members covering (and essentially closing) the entire outlet opening as seen the direction of the central axis of the outlet opening of the mouthpiece in the cutting position.

According to an embodiment, the leading edges of the cutting members overlap each other in the cutting position thereof.

According to an, at present, preferred embodiment, the leading edges of the cutting members abut each other or are arranged adjacent each other over the entire extent of the leading edges of the cutting members in the cutting position thereof.

As mentioned, the leading edges of the cutting members can be linear and alternatively have a curved shape. In the latter situation, the leading edges of the cutting members have a complementary curved shape.

In an embodiment, the cutting members and the leading edges thereof are moved towards each other in a rotational movement. In other words, the cutting device comprises a rotational system configured for moving the cutting members towards each other in a rotational movement.

In an alternative embodiment, the cutting members and the leading edges thereof are moved towards each other in a linear movement. In other words, the cutting device comprises a translation system configured for moving the cutting members towards each other in a linear movement.

In an at present preferred embodiment, the cutting members sweep the outlet opening adjacent the annular edge thereof or in contact with the annular edge defining the outlet opening.

The cutting members can also sweep in front of the outlet opening slightly spaced from the annular edge defining the outlet opening, such as spaced 2 to 7 mm from the annular edge.

The cutting members, especially a portion thereof at the leading edge, are preferably plate-shaped.

According to a further embodiment, the tubing of the feed-delivering device communicates at a lower upstream end thereof with the outlet of the pump of a pump mechanism having a pump inlet communicating with the interior of the feed container, and the tubing communicates at an upper downstream end with a mouthpiece inlet of the mouthpiece.

The pump of the pump mechanism can be arranged inside the feed container at the bottom thereof.

According to an embodiment, the delivering device is at a lower end thereof arranged pivotally relative to the feed container. It is thereby possible to adjust the position of the outlet opening of the mouthpiece of the feed-delivering device or feed-delivering arm to the desired height above the top wall of the cages.

According to an embodiment, the feed-delivering device is at a lower end thereof arranged at the back of the feed vehicle, such as at the back of the container.

The feed-delivery device can be arranged pivotally around an axis being essentially parallel with the longitudinal axis of the feed vehicle.

The tubing of the feed delivering device can be a flexible tubing. This could be the case for a manually handled feed-delivering device or a feed-delivering device attached to a robot arm.

The tubing of the feed-delivering device can be an essentially rigid tubing and the feed-delivering device thereby considered a feed delivering arm.

According to a further embodiment, the tubing, especially an essentially rigid tubing of the feed-delivering device, comprises a lower tubular section and an upper tubular section, the tubular sections being telescopically connected allowing for decreasing and increasing the length of the tubing, the upper tubular section being movable between a retracted and an extended position relative to the lower tubular section. Thereby, it is possible to adjust the length of the feed-delivering device or feed-delivering arm to the desired height of the outlet opening of the mouthpiece above the top wall of the cages.

According to an embodiment, the control device is configured for activating the cutting device to move the cutting members from the first position outside the outlet opening to the cutting position when the desired feed string has emerged from the outlet opening.

The control device can be configured to move the cutting members back to the first position after the feed string has been cut, such as immediate after the feed string has been cut.

Alternatively, the control device can be configured to maintain the cutting members in the cutting and closing position until immediately before the control device configured to control the operation of the pumping mechanism controls the pump mechanism to deliver feed out through the outlet opening. Unintentional spilling of feed is thereby avoided when the cutting members are dimensioned and configured to cover the entire outlet opening in the cutting position.

The control device can be configured to activate the cutting device when operation of the pump mechanism is stopped.

The control device can be configured to move the cutting members back to the first position after operation of the pump mechanism is stopped, such as immediately after operation of the pump mechanism is stopped.

According to a further embodiment, the control device can be configured to control the operation of the pump mechanism and the activation of the cutting device based on a predetermined individual amount of feed to be delivered to each individual cage.

The feed vehicle can be a manned vehicle operated by an operator. The feed delivering device can also be operated by the operator of the feed vehicle, the feed-delivering mouthpiece being manually operated by the operator.

The feed vehicle can be an unmanned vehicle having a control unit configured to control the feed-delivering device and to control the position of the feed vehicle and the speed of the feed vehicle based on appropriate sensors, detectors and emitters and GPS technic. The feed vehicle can be considered and named a feed robot.

The feed vehicle can comprise a detector, such as a camera, for determining the amount of feed present on a cage.

The feed vehicle can be electrically powered by a rechargeable battery.

### Brief Description of the Figures

Embodiments and examples of the invention will be described in more details in the following with regard to the accompanying figures. The figures show ways of implementing the present invention and are not to be construed as limiting to other possible embodiments falling within the scope of the attached set of claims.
Fig. 1 is a schematically perspective view of a first embodiment of a feed vehicle according to the invention, as seen obliquely from behind,
Fig. 2 is a schematically top view of the feed vehicle shown in Fig. 1,
Fig. 3 is a schematically perspective view of a first example of a cutting device of a feed-delivering device of an example of a feed vehicle according to the invention,
Fig. 4 is a schematically perspective view of a second example of a cutting device of a feed-delivering device of an example of a feed vehicle according to the invention,
Fig. 5 is a schematically cross-sectional view along the line IV-IV in Fig. 4.

### Detailed Description of the Invention

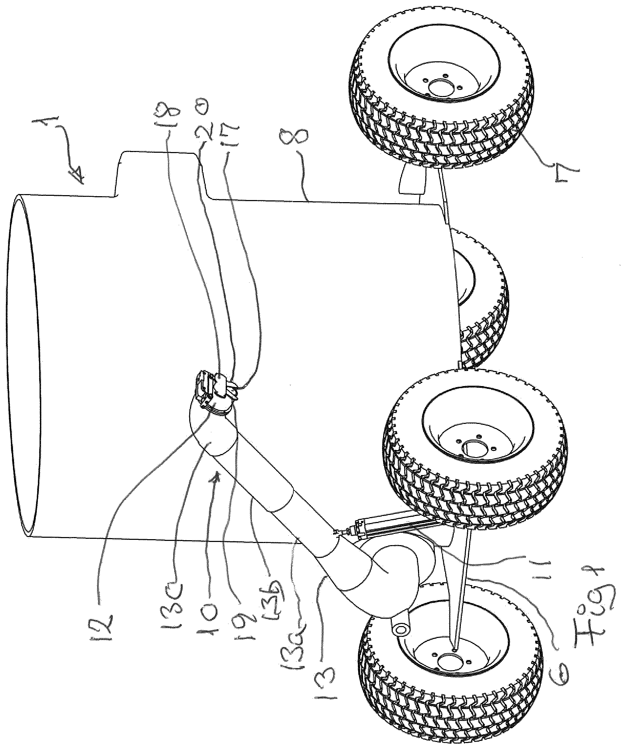

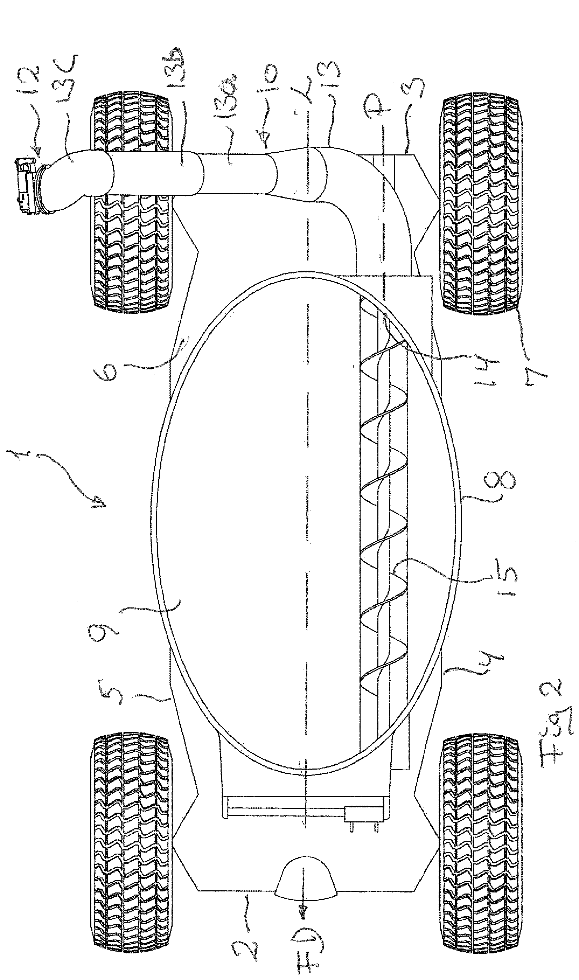

Reference is made to Figs. 1 and 2 disclosing a first embodiment of a powered unmanned feed vehicle 1 according to the present invention for feeding minks raised in mink cages having wire mesh top walls.

The feed vehicle 1 has a longitudinal axis L, a front 2, a back 3, a left lateral side 4 and a right lateral side 5 as seen in the forward driving direction FD of the vehicle 1 and comprises a frame 6 supported by four steerable wheels 7 and carrying a feed container 8 having an inner space 9 for storing feed.

Additionally, the feed vehicle 1 comprises a feed-delivering device in the form of a feed-delivering arm 10 for delivering feed from the feed container 8 to a feed-delivering mouthpiece 12 out through an outlet opening 17 of the mouthpiece 12 and on to the wire mesh top walls of the cages and a not shown programmable feeding control unit for controlling the amount of feed delivered to the individual cages.

The feed delivering arm 10 is at the back 3 of the vehicle 1 connected pivotally to the lower end of the rear of the feed container 8. The feed delivering arm is, by means of a linear actuator 11, pivotal between the shown operating position and a rest position around a pivot axis P being essentially parallel to the longitudinal axis L of the vehicle 1. In the shown operating position, the feed-delivering arm 10 extends outside the feed container 8 upwardly and laterally beyond a lateral side of the vehicle 1 in order to deliver feed to the top walls of the cages. The feed-delivering arm 10 extends upwardly and laterally in a plane being essentially perpendicular to the longitudinal axis L of the vehicle 1 and is pivoted in said plane. In the rest position, the feed discharge arm is pivoted to a more upright position to be positioned within the lateral boundaries of the vehicle 1 defined by the lateral sides and/or the wheels 7 of the vehicle 1.

The feed delivering arm 10 comprises a tubing 13 communicating at a lower end thereof with a pump outlet 14 of a screw pump 15 having a pump inlet 16 communicating with the interior of the feed container 8. In the present example, the screw pump 15 is the only pump of the pump mechanism and is configured to convey feed from the pump outlet 14 of the pump 15 through the tubing 13 and an upper bent section 13c. From the upper bent section 13c, being connected to the feed-delivering mouthpiece 12, the feed is conveyed into the mouthpiece and out through the outlet opening 17 of the mouthpiece in the shape of a string of feed. The string of feed is severed by a first example of the cutting device 18 having cutting members 19,20 and described in more detail below. The outlet opening 17 is defined by an annular edge 23 and has a central axis C.

Even though the pump mechanism in the present example only comprises the screw pump 15, it should be noted that the pump 15 could be another type of pump than a screw pump and that the pump mechanism could comprise additional pumps, such as a pump for pumping feed through the tubing and the mouthpiece and the outlet opening thereof, a pump for pumping the feed through the tubing and into the mouthpiece and a pump for pumping the feed from the mouthpiece and out through the outlet opening thereof.

The tubing 13 has at its lower end communicating with the pump outlet 14 a large diameter gradually passing into a smaller diameter and ending in the bent section 13c connected to the feed-delivering mouthpiece 12.

The tubular element 13 of the feed-delivering arm 10 comprises a lower tubular element section 13a and an upper tubular element section 13b including the bent section 13c. The first and second tubular element sections 13a,13b are telescopically connected allowing for decreasing and increasing the length of the feed discharge arm 10, the upper tubular element section 13b being movable between a retracted and an extended position relative to the lower tubular element section 13a.

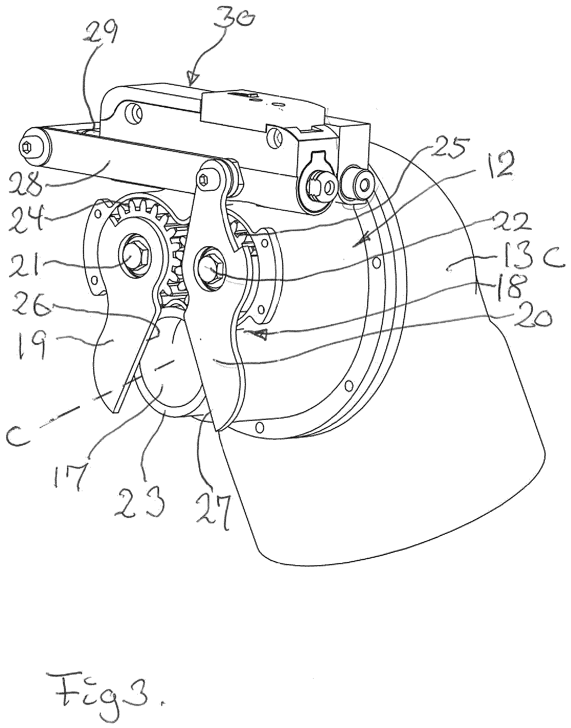

Reference is now made to Fig. 3 disclosing the first example of a cutting device 18. The cutting device 18 comprises a first cutting member 19 and a second cutting member 20 of a rotation system for moving the cutting members towards and away from each other in a rotational movement. Each cutting member has an upper portion being connected to a gear wheel 24,25, and the cutting members and the gearwheels are pivotally journaled to the mouthpiece 12 about respective pivot axes 21,22 arranged above the outlet opening 17 of the mouthpiece. The gear wheels 24,25 are in mutual engagement. Additionally, each of the cutting members 19,20 have a lower plate-shaped portion being a cutting portion provided with a linear leading edge 26,27. The upper portion of the second cutting member 22 is provided with an extension being pivotally connected to a first end of a link 28. An opposite second end of the link 28 is pivotally connected to the outer end of a rod 29 of a linear actuator 30. By activating the linear actuator 30, the lower portions of the cutting members 19,20 are movable between a first position where the lower portions are positioned outside the outlet opening 17 as seen in the direction of the central axis C of the outlet opening as shown in Fig. 3, and a second position being a cutting position where the lower portions of the cutting members 19,20 and the leading edges 26,27 are moved towards each other in a rotational movement, and the leading edges 26,27 meet and abut each other for cutting a feed string emerged from the outlet opening 17. The linear cutting edges 26,27 preferably meet and abut at a central line across the outlet opening and located in a vertical plane through the central axis C of the outlet opening 17. In the example shown, the cutting members 19,20 of the cutting device 18 are configured and dimensioned so that the lower portions of the cutting members cover and close the outlet opening in the cutting position, and the cutting device thereby functions as a combined cutting and closing device. When moving from the first position to the closing position, the cutting members 19,20 are in contact with or arranged adjacent the annular edge 23 defining the outlet opening 17.

Another possibility for moving the cutting members of the cutting device towards and away from each other in a rotational movement would be by means of a rotation system comprising rotation actuators connected to respective cutting members.

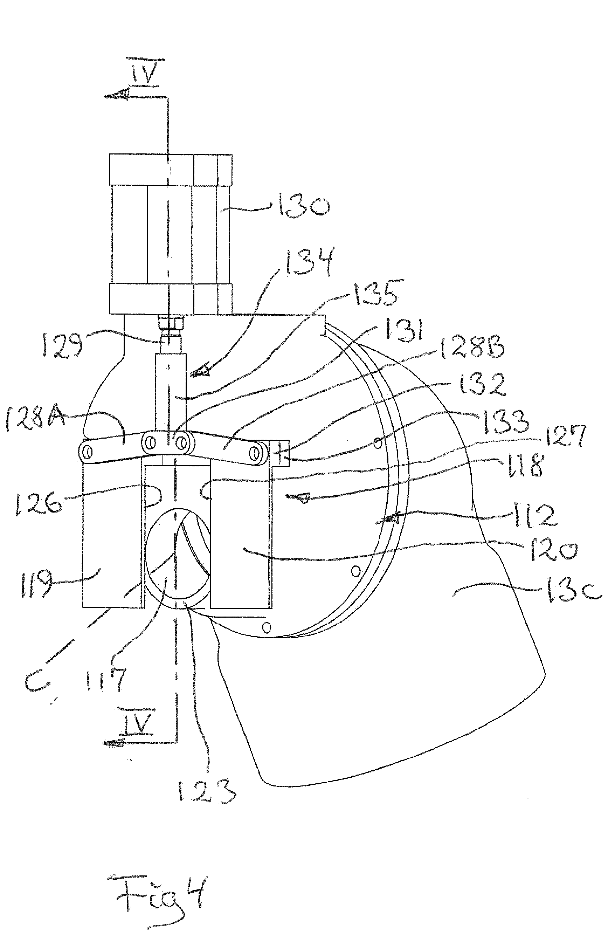

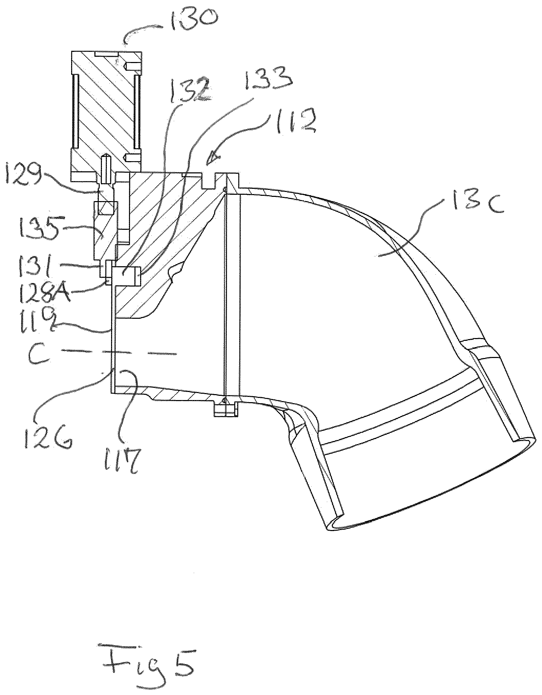

Reference is now made to Figs. 4 and 5 disclosing the second example of a cutting device 118. The cutting device 118 comprises a first cutting member 119 and a second cutting member 120 and a translatory system for moving the cutting members towards and away from each other. The cutting members are plate-shaped, and each cutting member 119,120 has a leading edge 126,127 and is at an upper potion thereof pivotally connected to a first end of a link 128A, 128B. The opposite end of the links 128A, 128B is pivotally connected to the respective end of a cross bar 131 of an inverted T-shaped element 134. The stem 135 of the T-shaped element 134 is centrally connected to the outer end of a rod 129 of a linear actuator arranged above the outlet opening 117 of the mouthpiece 112. Additionally, each cutting member is at an upper portion thereof provided with a rearwardly protruding guide bar 132,133 received in a guide groove 134 arranged above the outlet opening 117. By activating the linear actuator 130, the cutting members 119,120 are movable between a first position where they are positioned outside the outlet opening 117 as seen in the direction of the central axis C of the outlet opening as shown in Fig. 4, and a second position being a cutting position where the cutting members 119,120 and the leading edges 126,127 are moved towards each other in a linear movement, and the leading edges 126,127 meet and abut each other for cutting a feed string emerged from the outlet opening 117. The linear cutting edges 126,127 preferably meet and abut at a central line across the outlet opening and located in a vertical plane through the central axis C of the outlet opening 117. In the example shown, the cutting members 119,120 of the cutting device 118 are configured and dimensioned so that the cutting members cover and close the outlet opening in the cutting position, and the cutting device thereby functions as a combined cutting and closing device. When moving from the first position to the closing position, the cutting members 119,120 are in contact with or arranged adjacent the annular edge 123 defining the outlet opening 117 as it appears in Fig. 5.

Another possibility for moving the cutting members of the cutting device towards and away from each other in a translatory movement would be by means of a translatory system comprising linear actuators connected to respective cutting members.

### LIST OF REFERENCE NUMERALS

- 1: feed vehicle
- 2: front
- 3: back
- 4: left side
- 5: right side
- 6: frame
- 7: wheel
- 8: feed container
- 9: inner space
- 10: feed delivering device, feed delivering arm
- 11: linear actuator
- 12,112: mouthpiece
- 13: tubing
- 13a: lower tubular section
- 13b: upper tubular section
- 13c: bent section
- 14: pump outlet
- 15: pump
- 16: pump inlet
- 17,117: outlet opening
- 18,118: cutting device
- 19,119: cutting member
- 20,120: cutting member
- 21: pivot axis
- 22: pivot axis
- 23,123: annular edge
- 24: first gear wheel
- 25: second gear wheel
- 26, 126: first leading edge
- 27,127: second leading edge
- 28,128A, 128B: link
- 29, 129: rod
- 30,130: linear actuator
- 131: cross bar
- 132: guide bar
- 133: guide groove
- 134: T-shaped element
- 135: stem
- C: central axis
- FD: forward direction
- L: longitudinal axis
- P: pivot axis

## Claims

1. A powered feed vehicle (1) for delivering feed portions to fur animal cages, especially mink cages, especially to a wire mesh top wall thereof, said feed vehicle (1) having a longitudinal axis (L), a front (2), a back (3), a first lateral side and a second lateral side, and comprising:
- a frame (6) supported by wheels and carrying a feed container (8) with an inner space (9) for storing feed, especially pasty feed,
- a feed-delivering device (10) comprising a tubing (13) and a feed-delivering mouthpiece (12,112),
- a pump mechanism configured to pump feed from the feed container (8) into and through the tubing (13) of the feed-delivering device (10) to the feed-delivering mouthpiece (12, 112) of the feed-delivering device (10) and out through a feed outlet opening (17, 117) of the mouthpiece (12, 112), said feed outlet opening (17, 117) having a central axis and being defined by an annular edge,
- a cutting device (18, 118) comprising at least one cutting member arranged to be moved transversely in front of the outlet opening (17, 117) for severing a feed string emerging from the outlet opening (17, 117), and
- a control device for controlling the operation of the cutting device (18, 118),
wherein the cutting device (18, 118) comprises a first (19, 119) and a second cutting member (20, 120), **characterized by** each cutting member having a leading edge and being arranged to move towards each other from respective first positions outside the outlet opening as seen in the direction of the central axis of the outlet opening (17, 117) of the mouthpiece (12, 112) to a cutting position in which the leading edges of the cutting members meet within and together have swept the entire outlet opening (17, 117) as seen in the direction of the central axis of the outlet opening (17, 117) of the mouthpiece (12, 112) and severed a feed string emerging from the outlet opening (17, 117).

2. A feed vehicle according to claim 1, wherein the leading edges of the cutting members meet at a central line or band across the outlet opening (17, 117) and preferably at an essentially vertical central line located in an essentially vertical plane through the central axis of the outlet opening (17, 117) of the mouthpiece (12, 112).

3. A feed vehicle according to any of the preceding claims, wherein the leading edges of the cutting members (19, 119, 20, 120) are linear.

4. A feed vehicle according to any of the preceding claims, wherein the cutting members (19, 119, 20, 120) are configured and dimensioned to cover the entire outlet opening (17, 117) as seen in the direction of the longitudinal axis of the mouthpiece (12, 112) in the cutting position.

5. A feed vehicle according to any of the preceding claims, wherein the leading edges of the cutting members (19, 119, 20, 120) overlap each other in the cutting position thereof.

6. A feed vehicle according to any of the preceding claims 1 to 4, wherein the leading edges of the cutting members (19, 119, 20, 120) abut each other or are arranged adjacent each other over the entire extent of the leading edges of the cutting members (19, 119, 20, 120) in the cutting position thereof.

7. A feed vehicle according to any of the preceding claims 1 to 6, wherein the cutting members (19, 119, 20, 120) and the leading edges thereof are moved towards each other in a rotational movement.

8. A feed vehicle according to any of the preceding claims 1 to 6, wherein the cutting members (19, 119, 20, 120) and the leading edges thereof are moved towards each other in a linear movement.

9. A feed vehicle according to any of the preceding claims, wherein the cutting members (19, 119, 20, 120) sweep the outlet opening (17, 117) adjacent the annular edge thereof or in contact with the annular edge defining the outlet opening.

10. A feed vehicle according to any of the preceding claims, wherein the tubing (13) of the feed-delivering device communicates at a lower upstream end thereof with the outlet of the pump (15) of a pump mechanism having a pump inlet (16) communicating with the interior of the feed container (8), and the tubing (13) communicates at an upper downstream end with a mouthpiece inlet of the mouthpiece (12, 112).

11. A feed vehicle according to any of the preceding claims, wherein the delivering device (10) is at a lower end thereof arranged pivotally relative to the feed container.

12. A feed vehicle according to any of the preceding claims, wherein the feed-delivering device (10) is at a lower end thereof arranged at the back of the feed vehicle, such as at the back of the container (8).

13. A feed vehicle according to any of the preceding claims, wherein the tubing (13), especially an essentially rigid tubing of the feed-delivering device, comprises a lower tubular section (13a) and an upper tubular section (13b), the tubular sections being telescopically connected allowing for decreasing and increasing the length of the tubing, the upper tubular section being movable between a retracted and an extended position relative to the lower tubular section.

14. A feed vehicle according to any of the preceding claims, wherein the control device is configured for activating the cutting device to move the cutting members (19, 119, 20, 120) from the first position outside the outlet opening to the cutting position when the desired feed string has emerged from the outlet opening (17, 117).

15. A feed vehicle according to any of the preceding claims, wherein the control device is configured to control the operation of the pump mechanism and the activation of the cutting device based on a predetermined individual amount of feed to be delivered to each individual cage.

## Patentansprüche

1. Angetriebenes Fütterungsfahrzeug (1) zum Zuführen von Futterportionen zu Pelztierkäfigen, insbesondere Nerzkäfigen, insbesondere zu deren Drahtgitter-Oberwand, wobei das Fütterungsfahrzeug (1) eine Längsachse (L), eine Vorderseite (2), eine Rückseite (3), eine erste laterale Seite und eine zweite laterale Seite aufweist und umfasst:
- einen Rahmen (6), der von Rädern getragen wird und einen Futterbehälter (8) mit einem Innenraum (9) zur Lagerung von Futter, insbesondere pastösem Futter, trägt,
- eine Futterzuführvorrichtung (10), die einen Schlauch (13) und ein Futterzuführmundstück (12, 112) umfasst,
- einen Pumpmechanismus, der so konfiguriert ist, dass er Futter aus dem Futterbehälter (8) in und durch den Schlauch (13) der Futterzuführvorrichtung (10) zu dem Futterzuführmundstück (12, 112) der Futterzuführvorrichtung (10) und durch eine Futterauslassöffnung (17, 117) des Mundstücks (12, 112) nach außen zu pumpen, wobei die Futterauslassöffnung (17, 117) eine Mittelachse aufweist und durch einen ringförmigen Rand definiert ist,
- eine Schneidevorrichtung (18, 118), die mindestens ein Schneidelement umfasst, das so angeordnet ist, dass es quer vor der Auslassöffnung (17, 117) bewegt werden kann, um einen aus der Auslassöffnung (17, 117) austretenden Futterstrang zu durchtrennen, und
- eine Steuervorrichtung zum Steuern des Betriebs der Schneidvorrichtung (18, 118), wobei die Schneidvorrichtung (18, 118) ein erstes (19, 119) und ein zweites Schneidelement (20, 120) umfasst, **dadurch gekennzeichnet, dass** jedes Schneidelement eine Vorderkante aufweist und so angeordnet ist, dass es sich von jeweiligen ersten Positionen außerhalb der Auslassöffnung, gesehen in der Richtung der Mittelachse der Auslassöffnung (17, 117) des Mundstücks (12, 112), auf eine Schneidposition aufeinander zu bewegen, in der sich die Vorderkanten der Schneidelemente innerhalb der gesamten
Auslassöffnung (17, 117) treffen und diese gemeinsam überstrichen haben, gesehen in Richtung der Mittelachse der Auslassöffnung (17, 117) des Mundstücks (12, 112), und einen aus der Auslassöffnung (17, 117) austretenden Futterstrang durchtrennt haben.

2. Fütterungsfahrzeug nach Anspruch 1, wobei sich die Vorderkanten der Schneidelemente an einer Mittellinie oder einem Mittelband über die Auslassöffnung (17, 117) und vorzugsweise an einer im Wesentlichen vertikalen Mittellinie treffen, die sich in einer im Wesentlichen vertikalen Ebene durch die Mittelachse der Auslassöffnung (17, 117) des Mundstücks (12, 112) befindet.

3. Fütterungsfahrzeug nach einem der vorstehenden Ansprüche, wobei die Vorderkanten der Schneidelemente (19, 119, 20, 120) linear sind.

4. Fütterungsfahrzeug nach einem der vorstehenden Ansprüche, wobei die Schneidelemente (19, 119, 20, 120) so konfiguriert und dimensioniert sind, dass sie die gesamte Auslassöffnung (17, 117) abdecken, gesehen in der Richtung der Längsachse des Mundstücks (12, 112) in der Schneidposition.

5. Fütterungsfahrzeug nach einem der vorstehenden Ansprüche, wobei sich die Vorderkanten der Schneidelemente (19, 119, 20, 120) in der Schneidposition davon überlappen.

6. Fütterungsfahrzeug nach einem der vorstehenden Ansprüche 1 bis 4, wobei die Vorderkanten der Schneidelemente (19, 119, 20, 120) in der Schneidposition davon aneinander anliegen oder über die gesamte Erstreckung der Vorderkanten der Schneidelemente (19, 119, 20, 120) nebeneinander angeordnet sind.

7. Fütterungsfahrzeug nach einem der vorstehenden Ansprüche 1 bis 6, wobei die Schneidelemente (19, 119, 20, 120) und die Vorderkanten davon in einer Drehbewegung aufeinander zu bewegt werden.

8. Fütterungsfahrzeug nach einem der vorstehenden Ansprüche 1 bis 6, wobei die Schneidelemente (19, 119, 20, 120) und die Vorderkanten davon in einer linearen Bewegung aufeinander zu bewegt werden.

9. Fütterungsfahrzeug nach einem der vorstehenden Ansprüche, wobei die Schneidelemente (19, 119, 20, 120) die Auslassöffnung (17, 117) benachbart zu dem ringförmigen Rand oder in Kontakt mit dem die Auslassöffnung definierenden ringförmigen Rand überstreichen.

10. Fütterungsfahrzeug nach einem der vorstehenden Ansprüche, wobei der Schlauch (13) der Futterzuführvorrichtung an einem unteren stromaufwärtigen Ende davon mit dem Auslass der Pumpe (15) eines Pumpmechanismus verbunden ist, der einen Pumpeneinlass (16) aufweist, der mit dem Inneren des Futterbehälters (8) verbunden ist, und der Schlauch (13) an einem oberen stromabwärtigen Ende davon mit einem Mundstückeinlass des Mundstücks (12, 112) verbunden ist.

11. Fütterungsfahrzeug nach einem der vorstehenden Ansprüche, wobei die Zuführvorrichtung (10) an einem unteren Ende davon relativ zu dem Futterbehälter schwenkbar angeordnet ist.

12. Fütterungsfahrzeug nach einem der vorstehenden Ansprüche, wobei die Futterzuführvorrichtung (10) an einem unteren Ende davon an der Rückseite des Fütterungsfahrzeugs, wie zum Beispiel an der Rückseite des Behälters (8), angeordnet ist.

13. Fütterungsfahrzeug nach einem der vorstehenden Ansprüche, wobei der Schlauch (13), insbesondere ein im Wesentlichen starrer Schlauch der Futterzuführvorrichtung, einen unteren Schlauchabschnitt (13a) und einen oberen Schlauchabschnitt (13b) umfasst, wobei die Schlauchabschnitte teleskopisch miteinander verbunden sind, wodurch die Länge des Schlauchs verringert und vergrößert werden kann, wobei der obere Schlauchabschnitt relativ zu dem unteren Schlauchabschnitt zwischen einer zurückgezogenen und einer ausgefahrenen Position beweglich ist.

14. Fütterungsfahrzeug nach einem der vorstehenden Ansprüche, wobei die Steuervorrichtung so konfiguriert ist, dass sie die Schneidvorrichtung aktiviert, um die Schneidelemente (19, 119, 20, 120) aus der ersten Position außerhalb der Auslassöffnung in die Schneidposition zu bewegen, wenn der gewünschte Futterstrang aus der Auslassöffnung (17, 117) herausgetreten ist.

15. Fütterungsfahrzeug nach einem der vorstehenden Ansprüche, wobei die Steuervorrichtung so konfiguriert ist, dass sie den Betrieb des Pumpmechanismus und die Aktivierung der Schneidevorrichtung auf der Grundlage einer vorbestimmten individuellen Futtermenge steuert, die jedem einzelnen Käfig zugeführt werden soll.

## Revendications

1. Véhicule d'alimentation électrique (1) pour distribuer des portions d'aliments vers des cages d'animaux à fourrure, notamment des cages de visons, notamment vers une paroi supérieure en treillis métallique de celles-ci, ledit véhicule d'alimentation (1) présentant un axe longitudinal (L), un avant (2), un arrière (3), un premier côté latéral et un second côté latéral, et comprenant :
- un châssis (6) supporté par des roues et transportant un récipient d'alimentation (8) avec un espace intérieur (9) pour stocker des aliments, notamment des aliments pâteux,
- un dispositif de distribution d'aliments (10) comprenant un tube (13) et un embout de distribution d'aliments (12, 112),
- un mécanisme de pompe configuré pour pomper des aliments à partir du récipient d'alimentation (8) dans et à travers le tube (13) du dispositif de distribution d'aliments (10) vers l'embout de distribution d'aliments (12, 112) du dispositif de distribution d'aliments (10) et en dehors à travers une ouverture de sortie d'aliments (17, 117) de l'embout (12, 112), ladite ouverture de sortie d'aliments (17, 117) présentant un axe central et étant définie par un bord annulaire,
- un dispositif de coupe (18, 118) comprenant au moins un élément de coupe agencé pour être déplacé transversalement devant l'ouverture de sortie (17, 117) pour sectionner une chaîne d'aliments sortant de l'ouverture de sortie (17, 117), et
- un dispositif de commande pour commander le fonctionnement du dispositif de coupe (18, 118),
dans lequel le dispositif de coupe (18, 118) comprend un premier (19, 119) et un second éléments de coupe (20, 120), **caractérisés par le fait que** chaque élément de coupe présente un bord d'attaque et est agencé de manière à se déplacer l'un vers l'autre à partir de premières positions respectives hors de l'ouverture de sorti tel qu'observé dans la direction de l'axe central de l'ouverture de sortie (17, 117) de l'embout (12, 112) jusqu'à une position de coupe dans laquelle les bords d'attaque des éléments de coupe se rencontrent à l'intérieur et ensemble ont balayé l'ouverture de sortie (17, 117) entière tels qu'observés dans la direction de l'axe central de l'ouverture de sortie (17, 117) de l'embout (12, 112) et ont sectionné une chaîne d'aliments sortant de l'ouverture de sortie (17, 117).

2. Véhicule d'alimentation selon la revendication 1, dans lequel les bords d'attaque des éléments de coupe se rencontrent au niveau d'une ligne ou bande centrale à travers l'ouverture de sortie (17, 117) et de préférence au niveau d'une ligne centrale essentiellement verticale située dans un plan essentiellement vertical à travers l'axe central de l'ouverture de sortie (17, 117) de l'embout (12, 112).

3. Véhicule d'alimentation selon l'une quelconque des revendications précédentes, dans lequel les bords d'attaque des éléments de coupe (19, 119, 20, 120) sont linéaires.

4. Véhicule d'alimentation selon l'une quelconque des revendications précédentes, dans lequel les éléments de coupe (19, 119, 20, 120) sont configurés et dimensionnés de manière à couvrir l'ouverture de sortie (17, 117) entière tels qu'observés dans la direction de l'axe longitudinal de l'embout (12, 112) dans la position de coupe.

5. Véhicule d'alimentation selon l'une quelconque des revendications précédentes, dans lequel les bords d'attaque des éléments de coupe (19, 119, 20, 120) se chevauchent les uns les autres dans la position de coupe de ceux-ci.

6. Véhicule d'alimentation selon l'une quelconque des revendications 1 à 4 précédentes, dans lequel les bords d'attaque des éléments de coupe (19, 119, 20, 120) viennent en butée les uns contre les autres ou sont agencés de manière adjacente chacun l'un à l'autre sur l'étendue entière des bords d'attaque des éléments de coupe (19, 119, 20, 120) dans la position de coupe de ceux-ci.

7. Véhicule d'alimentation selon l'une quelconque des revendications 1 à 6 précédentes, dans lequel les éléments de coupe (19, 119, 20, 120) et les bords d'attaque de ceux-ci sont déplacés les uns vers les autres dans un mouvement de rotation.

8. Véhicule d'alimentation selon l'une quelconque des revendications 1 à 6 précédentes, dans lequel les éléments de coupe (19, 119, 20, 120) et les bords d'attaque de ceux-ci sont déplacés les uns vers les autres dans un mouvement linéaire.

9. Véhicule d'alimentation selon l'une quelconque des revendications précédentes, dans lequel les éléments de coupe (19, 119, 20, 120) balayent l'ouverture de sortie (17, 117) de manière adjacente au bord annulaire de celle-ci ou en contact avec le bord annulaire définissant l'ouverture de sortie.

10. Véhicule d'alimentation selon l'une quelconque des revendications précédentes, dans lequel le tube (13) du dispositif de distribution d'aliments communique à une extrémité d'amont inférieure de celui-ci avec la sortie de la pompe (15) d'un mécanisme de pompe présentant une entrée de pompe (16) communiquant avec l'intérieur du récipient d'alimentation (8), et le tube (13) communique à une extrémité d'aval supérieure avec une entrée d'embout de l'embout (12, 112).

11. Véhicule d'alimentation selon l'une quelconque des revendications précédentes, dans lequel le dispositif de distribution (10) se trouve à une extrémité inférieure de celui-ci agencé de manière pivotante par rapport au récipient d'alimentation.

12. Véhicule d'alimentation selon l'une quelconque des revendications précédentes, dans lequel le dispositif de distribution d'aliments (10) se trouve à une extrémité inférieure de celui-ci agencé à l'arrière du véhicule d'alimentation, tel qu'à l'arrière du récipient (8).

13. Véhicule d'alimentation selon l'une quelconque des revendications précédentes, dans lequel le tube (13), notamment un tube essentiellement rigide du dispositif de distribution d'aliments, comprend une section tubulaire inférieure (13a) et une section tubulaire supérieure (13b), les sections tubulaires étant reliées télescopiquement pour permettre de diminuer et d'augmenter la longueur du tube, la section tubulaire supérieure étant mobile entre une position rétractée et une position déployée par rapport à la section tubulaire inférieure.

14. Véhicule d'alimentation selon l'une quelconque des revendications précédentes, dans lequel le dispositif de commande est configuré pour activer le dispositif de coupe de manière à déplacer les éléments de coupe (19, 119, 20, 120) de la première position hors de l'ouverture de sortie à la position de coupe lorsque la chaîne d'aliments souhaitée est sortie de l'ouverture de sortie (17, 117).

15. Véhicule d'alimentation selon l'une quelconque des revendications précédentes, dans lequel le dispositif de commande est configuré pour commander le fonctionnement du mécanisme de pompe et l'activation du dispositif de coupe sur la base d'une quantité individuelle prédéterminée d'aliments à distribuer à chaque cage individuelle.
